# EUROPEAN PATENT APPLICATION

(11) **EP 4 376 111 A1**
(43) Date of publication of application: **29.05.2024**
(21) Application number: 23179949.5
(22) Date of filing: 19.06.2023
(51) Int. Cl.: H01M 4/04, H01M 4/38, H01M 10/054, H01M 10/0563, H01M 4/02

(54) **MANUFACTURING METHOD OF AN ALUMINIUM BATTERY**

(30) Priority: 23.11.2022 TW 111144712
(71) Applicant: APh ePower Co., Ltd., Kaohsiung City 821 (TW)
(72) Inventor: WU, Jui-Hsuan, 821 Kaohsiung City (TW); TSAI, Shih Po Ta, 821 Kaohsiung City (TW); YANG, Chun-Chieh, 821 Kaohsiung City (TW); CHEN, Shih-Min, 821 Kaohsiung City (TW)
(74) Representative: Becker, Eberhard

(57) **Abstract**

A manufacturing method of an aluminum battery includes: providing an aluminum electrode sheet (100) having an oxide layer (110); soaking the aluminum electrode sheet (100) in a first ionic liquid in a nitrogen atmosphere to remove the oxide layer (110), such that the aluminum electrode sheet (100) has an exposed part of aluminum metal (120); removing the aluminum electrode sheet (100) from the first ionic liquid and used as a negative electrode of the aluminum battery; and providing electrolyte. The exposed part of aluminum metal (120) is in direct contact with the electrolyte.

## Description

### Background

### Technical Field

The disclosure relates a manufacturing method of an aluminum battery.

### Description of Related Art

Generally speaking, the surface of the aluminum electrode sheet used as the negative electrode of an aluminum battery often has an oxide layer, so during the charging and discharging process of the aluminum battery, the electrolyte in the battery often reacts with the oxide layer first, resulting in poor aluminum-dissolving reaction of the aluminum battery. This has a negative impact on the battery capacity, thereby reducing the capability of the aluminum battery.

### Summary

A manufacturing method of an aluminum battery, such that the aluminum battery may have better battery performance and further improve its capability, is provided in the disclosure.

A manufacturing method of an aluminum battery includes the following operation. An aluminum electrode sheet having an oxide layer is provided. The aluminum electrode sheet is soaked in a first ionic liquid in a nitrogen atmosphere to remove the oxide layer, such that the aluminum electrode sheet has an exposed part of aluminum metal. The aluminum electrode sheet is removed from the first ionic liquid and used as a negative electrode of the aluminum battery. Electrolyte is provided. The exposed part of aluminum metal is in direct contact with the electrolyte.

In an embodiment of the disclosure, soak time is positively correlated with discharge capacity of the aluminum battery.

In an embodiment of the disclosure, a contact area where the exposed part of aluminum metal is in direct contact with the electrolyte is positively correlated with the battery capacity of the aluminum battery.

In an embodiment of the disclosure, the contact area where the exposed part of aluminum metal is in direct contact with the electrolyte is greater than or equal to 10%.

In an embodiment of the disclosure, the contact area where the exposed part of aluminum metal is in direct contact with the electrolyte is less than or equal to 100%.

In an embodiment of the disclosure, the first ionic liquid includes aluminum halide and imidazolium chloride.

In an embodiment of the disclosure, a usage amount of the aluminum halide is greater than or equal to a usage amount of imidazolium chloride.

In an embodiment of the disclosure, a molar ratio of the aluminum halide to the imidazolium chloride is between 1 and 2.

In an embodiment of the disclosure, the electrolyte includes a second ionic liquid.

In an embodiment of the disclosure, the second ionic liquid includes aluminum halide and imidazolium chloride.

Based on the above, the manufacturing method of the aluminum battery of the disclosure uses an ionic liquid and a nitrogen atmosphere to perform a pretreatment step on the aluminum electrode sheet to be used as the negative electrode, so as to remove the oxide layer on the surface of the aluminum electrode sheet and form an exposed part of aluminum metal. In this way, the exposed part of aluminum metal of the negative electrode in the aluminum battery may be in direct contact with the electrolyte, increasing the reaction area between the negative electrode and the electrolyte and the amount of aluminum dissolved, so that the aluminum battery may have better battery performance, which may further improve its capability.

In order to make the above-mentioned features and advantages of the disclosure comprehensible, embodiments accompanied with drawings are described in detail below.

### BRIEF DESCRIPTION OF THE DRAWINGS

FIG. 1A is a schematic flowchart of a manufacturing method of an aluminum battery according to an embodiment of the disclosure.
FIG. 1B is a data graph of the discharge capacity versus soak time of an aluminum battery according to an embodiment of the disclosure.
FIG. 2A is a schematic diagram of an aluminum electrode sheet of an aluminum battery subjected to a soaking pretreatment in an ionic liquid for 24 hours of an embodiment of the disclosure.
FIG. 2B is a schematic diagram of an aluminum electrode sheet of an aluminum battery subjected to a soaking pretreatment in an ionic liquid for 48 hours of an embodiment of the disclosure.
FIG. 2C is a schematic diagram of an aluminum electrode sheet having an oxide layer that has not been subjected to the soaking step of some embodiments of the disclosure.
FIG. 2D and FIG. 2E are schematic diagrams of the aluminum electrode sheet of FIG. 2C subjected to the soaking step for 24 hours at different molar ratios of aluminum halide to imidazolium chloride.
FIG. 3 is a Raman spectrum schematic diagram of an aluminum electrode sheet of an aluminum battery subjected to pretreatment with a soak time of 0 hours and a soak time of 48 hours of an embodiment of the disclosure.

### DETAILED DESCRIPTION OF DISCLOSED EMBODIMENTS

Embodiments of the disclosure are explained in detail below. However, these embodiments are exemplary, the disclosure is not limited thereto, and the disclosure is defined by the scope of the claims.

Unless otherwise defined, all terms (including technical and scientific terms) used herein have the same meaning as commonly understood by one of ordinary skill in the art to which this disclosure belongs. It should be further understood that terms (such as those defined in commonly used dictionaries) should be construed as having meanings consistent with their meanings in the context of the related art, and are not to be construed as idealized or excessive formal meaning, unless expressly defined as such herein.

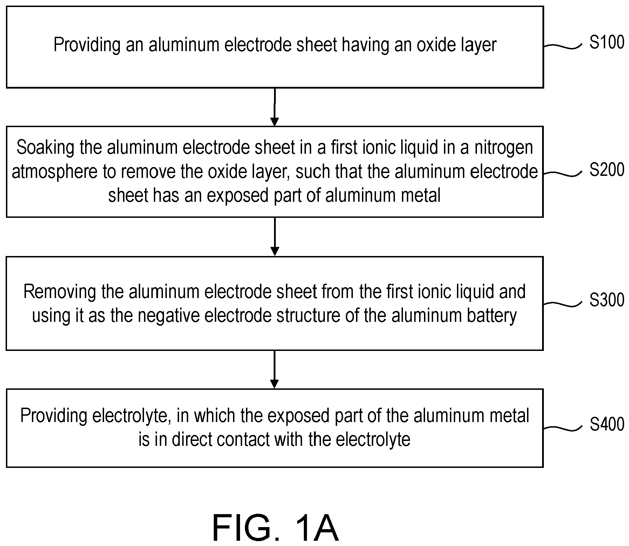

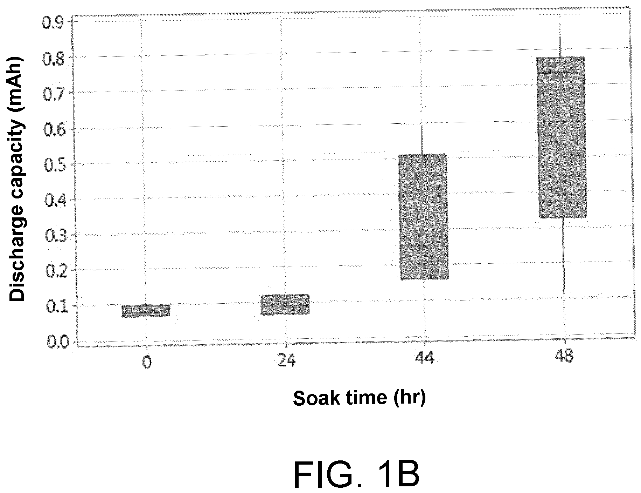

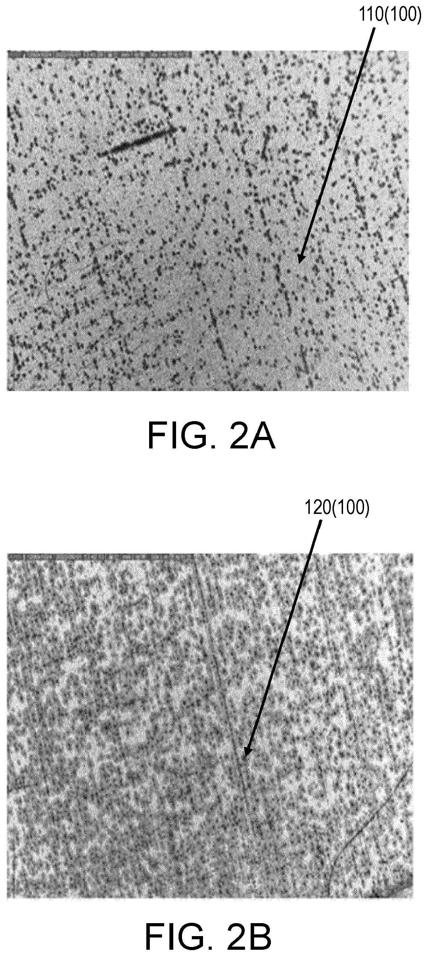

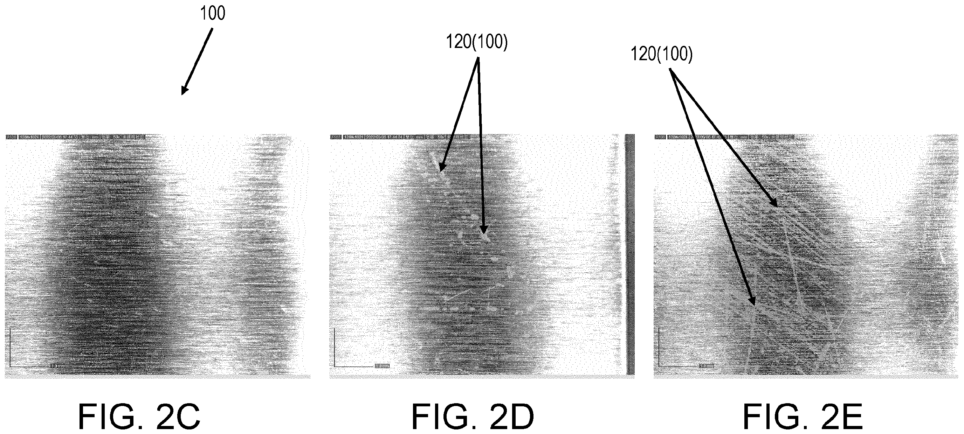

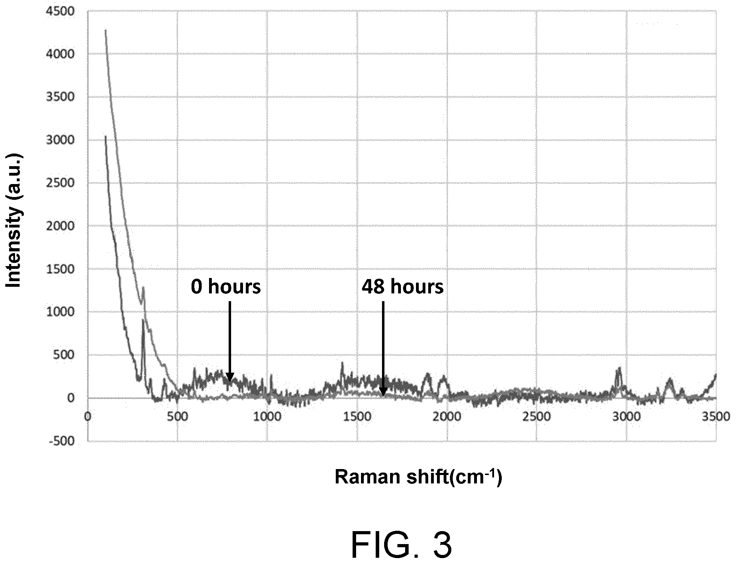

FIG. 1A is a schematic flowchart of a manufacturing method of an aluminum battery according to an embodiment of the disclosure. FIG. 1B is a data graph of the discharge capacity versus soak time of an aluminum battery according to an embodiment of the disclosure. FIG. 2A is a schematic diagram of an aluminum electrode sheet of an aluminum battery subjected to a soaking pretreatment in an ionic liquid for 24 hours of an embodiment of the disclosure. FIG. 2B is a schematic diagram of an aluminum electrode sheet of an aluminum battery subjected to a soaking pretreatment in an ionic liquid for 48 hours of an embodiment of the disclosure. FIG. 3 is a Raman spectrum schematic diagram of an aluminum electrode sheet of an aluminum battery subjected to pretreatment with a soak time of 0 hours and a soak time of 48 hours of an embodiment of the disclosure. Here, FIG. 2A and FIG. 2B are images obtained by using a digital microscope (X50), and the experimental conditions are, for example, soaking in an ionic liquid with a molar ratio of aluminum halide to imidazolium chloride of 1.8:1, a stirring temperature of 60°C, and a soak time of 24 hours (FIG. 2A) and 48 hours (FIG. 2B), respectively. The aluminum halide used in FIG. 2D and FIG. 2E is aluminum chloride (AlCl₃), the imidazolium chloride is 1-ethyl-3-methylimidazolium chloride (EMIC), and the molar ratio of aluminum halide to imidazolium chloride is respectively 1.3:1 and 1.8:1. It should be noted that other unspecified content should be obtained and adjusted by those of ordinary skill in the art to which the disclosure belongs according to any content included in the spirit and scope of the appended patent.

Referring to FIG. 1A, FIG. 1B, FIG. 2A, FIG. 2B, and FIG. 3, in step S100, an aluminum electrode sheet 100 having an oxide layer 110 is provided. In step S200, the aluminum electrode sheet 100 is soaked in the first ionic liquid is a nitrogen atmosphere to remove the oxide layer 110 so that the aluminum electrode sheet 100 has an exposed part of aluminum metal 120. It should be noted that since the aluminum electrode sheet 100 may be formed of the aluminum metal and the oxide layer 110 formed on its surface, when the oxide layer 110 is removed, the underlying aluminum metal is exposed, thereby forming the exposed part of aluminum metal 120, but the disclosure is not limited thereto. In addition, the oxide layer 110 may be any oxide layer formed under any circumstances, such as aluminum metal formed due to exposure to the atmosphere.

In step S300, the aluminum electrode sheet 100 is removed from the first ionic liquid and used as the negative electrode structure of the aluminum battery, that is, the aluminum electrode sheet 100 is placed into the aluminum battery as the negative electrode structure after the pretreatment step of soaking. In step S400, an electrolyte is provided, in which the exposed part of aluminum metal 120 is in direct contact with the electrolyte. Accordingly, the manufacturing method of the aluminum battery of this embodiment uses an ionic liquid and a nitrogen atmosphere to perform a pretreatment step on the aluminum electrode sheet 100 to be used as the negative electrode, so as to remove the oxide layer 110 on the surface of the aluminum electrode sheet 100 and form an exposed part of aluminum metal 120. In this way, the exposed part of aluminum metal 120 of the negative electrode in the aluminum battery may be in direct contact with the electrolyte, increasing the reaction area between the negative electrode and the electrolyte and the amount of aluminum dissolved, so that the aluminum battery may have better battery performance, which may further improve its performance.

Furthermore, as shown in FIG. 1B, the soak time is positively correlated with the discharge capacity of the aluminum battery, that is, the longer the aluminum electrode sheet 100 to be used as the negative electrode is subjected to the pretreatment step, the more significant the subsequent impact on the battery performance of the aluminum battery. For example, when the soak time (the time of performing the pretreatment step) is greater than 24 hours, the discharge capacity of the aluminum battery is significantly improved, but the disclosure is not limited thereto.

In some embodiments, the electrolyte includes a second ionic liquid, and the second ionic liquid includes aluminum halide and imidazolium chloride. For example, the aluminum halide includes aluminum chloride (AlCl₃), and the imidazolium chloride includes 1- Ethyl-3-methylimidazolium (EMIC) or l-butyl-3- methylimidazolium chloride (BMIC). The aforementioned ionic liquid may produce AlCl₄⁻, Al₂Cl₇⁻, EMI⁺/BMI⁺, Al₃⁺, Al⁺, and (coordination) complexes of the above ions. Since the aluminum electrode sheet 100 is used as the negative electrode of the aluminum battery after removing the oxide layer 110, and the exposed part of aluminum metal 120 is in direct contact with the electrolyte, during the charging and discharging process of the aluminum battery, Al₂Cl₇⁻ and related Cl⁻ ions are not required to additionally react with the oxide layer (which has been removed in the pretreatment step), which may accelerate the overall reaction efficiency.

In addition, the more the exposed part of aluminum metal 120, the larger the area that may participate in the reaction, so the amount of aluminum dissolved may be increased to effectively improve the battery performance of the aluminum battery, thereby improving its performance. That is, the contact area where the exposed part of aluminum metal 120 is in direct contact with the electrolyte is positively correlated with the battery capacity of the aluminum battery. For example, when the contact area of the exposed part of aluminum metal 120 in direct contact with the electrolyte is greater than or equal to 10%, and the contact area of the exposed part of aluminum metal in direct contact with the electrolyte is less than or equal to 100%, there may be a better improvement effect, but the disclosure is not limited thereto. It should be noted that when the contact area of the exposed part of aluminum metal 120 in direct contact with the electrolyte is equal to 100%, it means that there is no oxide layer on the aluminum electrode sheet 100, and the oxide layer has been completely removed in the pretreatment step.

The details of the pretreatment step are further described below, however, these details are not intended to limit the disclosure.

In this embodiment, the nitrogen atmosphere is, for example, located in a glove box that may effectively control the atmosphere, so that repeated oxidation of aluminum metal in the atmosphere may be avoided, and the oxide layer 110 may be effectively removed from the aluminum electrode sheet 100. Since no acidic solution (e.g., hydrochloric acid, sulfuric acid, nitric acid, etc.) is used for surface treatment, no moisture remains, thereby reducing the probability of negative impact on the aluminum battery.

In some embodiments, the water/oxygen content of the nitrogen atmosphere is less than 100ppm (e.g., 90ppm, 70ppm, 50ppm, 30ppm, 10ppm, 1ppm or any value less than 100ppm above). Under the control of this condition, the probability of repeated oxidation of aluminum metal may be further reduced, but the disclosure is not limited thereto.

In some embodiments, due to the spontaneous reaction between the first ionic liquid and the oxide layer, the longer the soak time, the greater the amount and area of the reaction, that is, the longer the soak time, the greater the removal amount of the oxide layer. Therefore, the removal amount of the oxide layer is positively correlated with the soak time of the soaking step. For example, as shown in FIG. 2A and FIG. 2B, when the soak time reaches 48 hours, the surface of the aluminum electrode sheet 100 has obviously removed most of the oxide layer 110, but the disclosure is not limited thereto.

In some embodiments, the first ionic liquid includes aluminum halide and imidazolium chloride. For example, the aluminum halide includes aluminum chloride (AlCl₃), and the imidazolium chloride includes 1- Ethyl-3- methylimidazolium (EMIC) or l-butyl-3-methylimidazolium chloride (BMIC). The aforementioned ionic liquid may produce AlCl₄⁻, Al₂Cl₇⁻, EMI⁺/BMI⁺, Al₃⁺, Al⁺, and (coordination) complexes of the above ions. In addition, since Al₂Cl₇⁻ reacts with the oxide layer 110, the more Al₂Cl₇⁻ produced, the better the removal effect, but the disclosure is not limited thereto.

In some embodiments, the usage amount of aluminum halide may be greater than or equal to the usage amount of imidazodium chloride, and the molar ratio of aluminum halide to imidazodium chloride is between 1 to 2 (e.g., aluminum halide:imidazodium chloride = 1:1, aluminum halide:imidazodium chloride = 1.2:1, aluminum halide:imidazodium chloride = 1.4:1, aluminum halide:imidazodium chloride = 1.6:1, aluminum halide:imidazodium chloride = 1.8:1, aluminum halide:imidazolium chloride = 2:1, or any molar ratio in the above range), but the disclosure is not limited thereto.

In some embodiments, the higher the molar ratio of aluminum halide to imidazolium chloride, the better the removal effect may be. For example, as shown by comparing FIG. 2C and FIG. 2D, after the aluminum electrode sheet 100 is soaked for 24 hours at a molar ratio of aluminum halide to imidazolium chloride of 1.3:1, it may be seen that at the position indicated by the arrow, the exposed part of aluminum metal 120 appears as gray-whitish and rusty parts. As shown by comparing FIG. 2C and FIG. 2E, after the aluminum electrode sheet 100 is soaked for 24 hours at a molar ratio of aluminum halide to imidazolium chloride of 1.8:1, it may be seen that at the position indicated by the arrow, the exposed part of aluminum metal 120 appears as more prominent gray-whitish and rusty strips.

In addition, it may be deduced by Raman spectroscopy that the removal method of this embodiment may indeed effectively remove the oxide layer 110 on the aluminum electrode sheet 100. For example, when performing the soaking step, when the aluminum halide is aluminum chloride (AlCl₃), and imidazolium chlorides include l-ethyl-3- methylimidazolium chloride (EMIC), since Al₂Cl₇⁻ reacts with the oxide layer 110, the longer the soaking time, the more AlCl₄⁻ and the less Al₂Cl₇⁻. That is, the ratio between AlCl₄⁻ and Al₂Cl₇⁻ increases, and the molar ratio (referred to as the AE ratio) of aluminum chloride to l-ethyl-3- methylimidazolium chloride decreases. This trend may prove that the oxide layer 110 on the surface of the aluminum electrode sheet 100 has been effectively removed. As shown in FIG. 3 and Table 1, in particular initially soaking the aluminum electrode sheet 100 in an ionic liquid with an AE ratio of 1.8 (the corresponding soak time is 0 hours) versus after soaking the aluminum electrode 100 for 48 hours, the ratio between AlCl₄⁻ and Al₂Cl₇⁻ increases and the AE ratio decreases, but the disclosure is not limited thereto.

**Table 1**

| Soak time | Raman peak | | | AE ratio |
|---|---|---|---|---|
| | AlCl₄⁻ | Al₂Cl₇⁻ | Ratio (AlCl₄⁻/Al₂Cl₇⁻) | |
| 0 hours | 224 | 908.76 | 0.25 | 1.8 |
| 48 hours | 797.54 | 1287.46 | 0.62 | 1.65 |

In some embodiments, the pretreatment step further uses a heating step, a stirring step, a shaking step, or a combination thereof to improve the removal efficiency. For example, a heating step, a stirring step, and a shaking step may be added at any point of the soaking step (during an initial soaking, a middle stage soaking, or a final stage soaking). One or more of the heating step, stirring step, and shaking step may be used, such as individually using the heating step, stirring step, or shaking step. Alternatively, when using more than one steps of the above, such as using a combination of the heating step and the stirring step, using a combination of the stirring step and the shaking step, using a combination of heating step and the shaking step, or using a combination of the heating step, the stirring step and the shaking step, each of the steps may be introduced into the soaking step at the same time or at different times, the disclosure is not limited thereto.

In some embodiments, the higher the temperature of the heating step (e.g., greater than 60° C), the longer the stirring step or shaking step (e.g., greater than 24 hours), the effect of removing the oxide layer 110 may be further improved, but the disclosure is not limited thereto.

To sum up, the manufacturing method of the aluminum battery of the disclosure uses an ionic liquid and a nitrogen atmosphere to perform a pretreatment step on the aluminum electrode sheet to be used as the negative electrode, so as to remove the oxide layer on the surface of the aluminum electrode sheet and form an exposed part of aluminum metal. In this way, the exposed part of aluminum metal of the negative electrode in the aluminum battery may be in direct contact with the electrolyte, increasing the reaction area between the negative electrode and the electrolyte and the amount of aluminum dissolved, so that the aluminum battery may have better battery performance, which may further improve its capability.

## Claims

1. A manufacturing method of an aluminum battery, comprising:
providing an aluminum electrode sheet (100) having an oxide layer (110);
soaking the aluminum electrode sheet (100) in a first ionic liquid in a nitrogen atmosphere to remove the oxide layer (110), such that the aluminum electrode sheet (100) has an exposed part of aluminum metal (120); and
removing the aluminum electrode sheet (100) from the first ionic liquid and using the aluminum electrode sheet (100) as a negative electrode of the aluminum battery; and
providing electrolyte, wherein the exposed part of aluminum metal (120) is in direct contact with the electrolyte.

2. The manufacturing method of the aluminum battery according to claim 1, wherein soak time is positively correlated with discharge capacity of the aluminum battery.

3. The manufacturing method of the aluminum battery according to claim 1, wherein a contact area where the exposed part of aluminum metal (120) is in direct contact with the electrolyte is positively correlated with battery capacity of the aluminum battery.

4. The manufacturing method of the aluminum battery according to claim 3, wherein the contact area where the exposed part of aluminum metal (120) is in direct contact with the electrolyte is greater than or equal to 10%.

5. The manufacturing method of the aluminum battery according to claim 4, wherein the contact area where the exposed part of aluminum metal (120) is in direct contact with the electrolyte is less than or equal to 100%.

6. The manufacturing method of the aluminum battery according to claim 1, wherein the first ionic liquid comprises aluminum halide and imidazolium chloride.

7. The manufacturing method of the aluminum battery according to claim 6, wherein a usage amount of the aluminum halide is greater than or equal to a usage amount of imidazolium chloride.

8. The manufacturing method of the aluminum battery according to claim 6, wherein a molar ratio of the aluminum halide to the imidazolium chloride is between 1 and 2.

9. The manufacturing method of the aluminum battery according to claim 1, wherein the electrolyte comprises a second ionic liquid.

10. The manufacturing method of the aluminum battery according to claim 9, wherein the second ionic liquid comprises aluminum halide and imidazolium chloride.
